# EUROPEAN PATENT SPECIFICATION

(11) **EP 0 395 499 B1**
(45) Date of publication and mention of the grant of the patent: **28.07.1993**
(21) Application number: 90401110.3
(22) Date of filing: 25.04.1990
(51) Int. Cl.: G01V 1/40

(54) **Method and apparatus for the acoustic investigation of a casing cemented in a borehole**
Verfahren und Gerät zur akustischen Untersuchung der in einem Bohrloch zementierten Verrohrung
Procédé et dispositif pour l'examen acoustique du tube cémenté dans un trou de forage

(30) Priority: 26.04.1989 FR 8905520
(43) Date of publication of application: 31.10.1990
(73) Proprietor: SCHLUMBERGER LIMITED, New York, N.Y. 10172 (US); SOCIETE DE PROSPECTION ELECTRIQUE SCHLUMBERGER, F-75007 Paris (FR); SCHLUMBERGER TECHNOLOGY B.V., NL-2517 KM Den Haag (NL); SCHLUMBERGER HOLDINGS LIMITED, Road Town, Tortola (VG)
(72) Inventor: Wright, Peter, Dallas, Texas 75252 (US)
(74) Representative: Hagel, Francis

(56) References cited:
- EP-A- 0 176 400
- EP-A- 0 176 408
- IEEE 1986 ULTRASONICS SYMPOSIUM PROCEEDINGS, Williamsburg, VA, 17th - 19th November 1986, pages 563-571; R.M. HAVIRA: "Ultrasonic techniques in oil well logging"
- PROCEEDINGS OF THE IEEE, vol. 73, no. 7, July 1985, pages 1159-1168, IEEE, New York, US; R. KUC: "Bounds on estimating the acoustic attenuation of small tissue regions from reflected ultrasound"

## Description

The invention relates to the acoustic inspection of a casing cemented in a borehole which traverses underground strata. It relates more particularly to a method for processing a measured acoustic signal for forming signals representative of characteristics relating to the casing and to the surrounding materials, while simultaneously compensating for variations in the acoustic pulse generated and the acoustic attenuation by the mud filling the borehole.

In general, once a well has reached the desired depth, the borehole is cased, with cement being injected into the annular space between the casing and the wall of the borehole in order to prevent hydraulic communication between the various geological strata. In order to determine whether such unwanted communication nevertheless exists, measurements may be performed downhole by means of a logging tool in order to determine the quality of the bond between the cement and the casing. Another information of interest which can be derived from these measurements is the thickness of the casing.

It has long been the practice to use acoustic waves for performing such measurements. Such techniques have relied on measurements which are averages in the circumferential and/or longitudinal direction of the casing, and consequently cannot identify localized phenomena such as longitudinal hydraulic communication paths. A complete presentation of prior art techniques can be found in U.S. Patent 4,255,798 to Havira, columns 2-7.

Of the techniques that have sought to improve the vertical and radial resolution in such inspection, the technique described in the above-mentioned Havira patent turns out to have been an extremely important breakthrough. This technique consists in emitting an acoustic pulse over a radial sector of the casing, with the pulse being constituted by acoustic waves at frequencies selected to cause resonance to appear across the thickness of the casing between its outside wall and its inside wall; in determining the energy present in a reverberation segment of the reflected signal; and in characterizing from said energy the quality of the bond of the cement behind said radial sector of the casing. The reverberation segment under consideration is selected so as to be substantially representative of acoustic reverberation between the walls of the casing. Rapid damping of the resonance, in other words low energy, means that cement is present behind the casing, whereas slow damping, i.e. high energy, means that there is no cement.

A logging tool using such a technique is described in a commercial brochure entitled "Cement Evaluation Tool" published by Schlumberger in June 1983. The sonde of this tool is centered within the casing.

The sonde includes eight transducers distributed helically at 45° intervals, thereby obtaining good coverage around the periphery of the casing. Acoustic pulses are fired sequentially. They are likewise received sequentially and analyzed and transmitted to the surface where they are processed.

In addition, a ninth transducer referred to as the "reference" transducer points along the axis of the casing towards a reflecting wall which is plane and disposed at a fixed distance from the reference transducer. The reflection signal detected by the ninth transducer is used to determine in situ the propagation time through the borehole fluid (mud), i.e. the time interval between emission and reception of the acoustic wave, and the wave's propagation velocity through the mud is deduced therefrom. Given the propagation velocity of the wave, it is possible to determine the apparent radius of the casing for each of the eight transducers. It is particularly advantageous to obtain this radius since it makes it possible, in particular, to detect any possible deformation of the casing and to monitor the centering of the sonde inside the casing in order to obtain an indication of the validity and the quality of the measurements as performed.

In this technique, a portion is taken from the reflected acoustic signal, which portion is representative of acoustic reflections between the walls of the casing.

A signal QCᵢ is derived therefrom representative of the quality of the bond of the cement with the casing on the basis of the energy W2 measured in a reverberation segment of the reflected signal S.

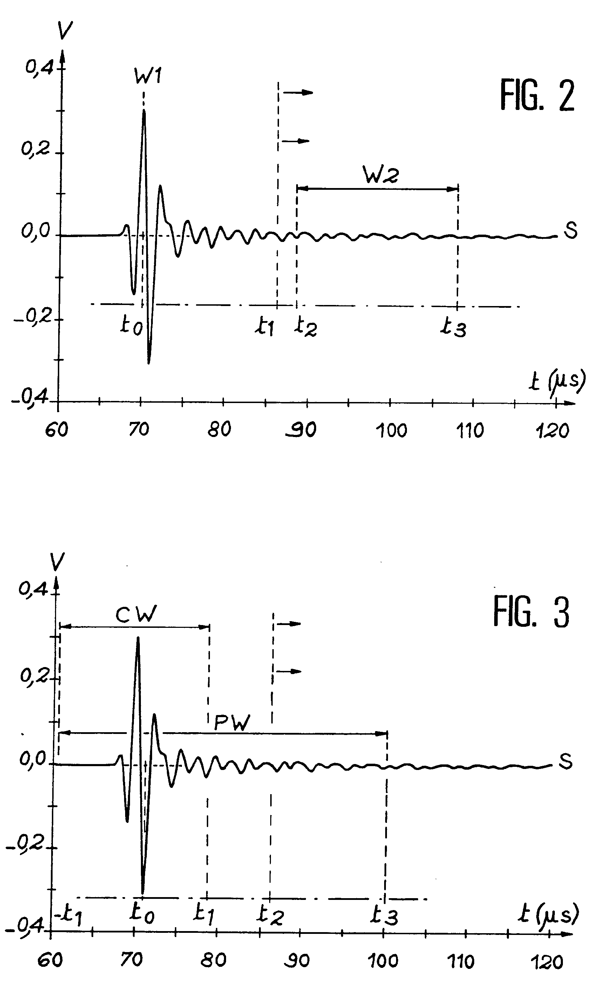

The changes in amplitude of such a signal S as a function of time and as picked up by a transducer are shown in Figure 2. The effects due to the mud are taken into account by normalizing the measured energy W2 relative to the peak amplitude signal W1 of the reflected acoustic signal. Nevertheless, it turns out that this normalization does not give complete satisfaction since quantitative interpretation of the measurements shows up problems of divergence in the measurements.

Tests and experiments performed by the Applicant have shown that these differences can be attributed to a large extent to the fact that the conventional processing is sensitive to the properties of the mud, to the characteristics of the transducer and of its drive electronics.

The Applicant has observed that the normalization of the portion of the signal at energy W2 was being performed using a peak amplitude signal W1 which did not correspond to the same frequencies as those present in the portion of the signal corresponding to the energy W2.

In general, the energy W1 is not at the same frequency as the energy W2, even in water. The energy W1 is a measure of the energy maximum conveyed by a spectrum component which depends on the properties of the pulse i.e. the characteristics of the transducer and its drive elctronics, and on the attenuation by the mud, whereas the energy W2 includes energy only around the resonance frequency of the casing.

The Applicant proposes a different concept for processing the reflected acoustic signal, whereby variations in acoustic pulse characteristics and mud attenuation can be compensated for in a satisfactory fashion and the reliability of the cement bond and other information obtained from the measurements can be improved.

There is provided according to the invention a method for determining at least one characteristic of a casing cemented in a borehole, such as cement bond and casing thickness, from a reflected acoustic signal S(t) obtained by directing an acoustic pulse at a substantially normal incidence towards a radial sector of the wall of the casing, said pulse stimulating thickness resonance within the walls of the casing, comprising the steps of : defining a first time window corresponding to a first portion of signal S(t) including the initial reflection from the casing and subsequent acoustic returns due to resonance, defining a second time window corresponding to a second portion of signal S(t) only including the initial reflection from the casing, and determining said casing characteristic from information related to resonance contained in said first time window while normalizing said information by information contained within said second time window.

Other characteristics and advantages of the invention appear from reading the following description made with reference to the accompanying drawings, in which:
Figure 1A is a diagram of an apparatus for cement evaluation, the apparatus being shown in use in a borehole;
Figure 1B shows in more detail the sonde of the apparatus of Figure 1A;
Figure 2 shows a reflected acoustic signal S as detected by the transducer T, with signal portions W1, W2 as defined in the prior art method;
Figure 3 shows a reflected acoustic signal S as detected by the transducer T, with signal portions CW and PW defined in accordance with the present invention;
Figures 4 and 5 show, respectively, the normalization window C and the processing window P as defined in the method of the invention;
Figure 6 shows the frequency spectrum of the signal amplitude, with solid lines for the signal windowed with the processing window and with dashed lines for the signal windowed with the normalization window;
Figure 7 shows a portion of the group delay spectrum of the signal after normalization, highlighting a dip indicative of a resonance;
Figures 8 and 9 show in solid lines the amplitude spectrum and in dashed lines the group delay spectrum of the reflected signal as obtained from synthetic data for, respectively, casings of two different thicknesses;
Figure 10 is a diagram of an electromagnetic model of the casing, the cement, and the mud, for use in a method for computing the cement impedance and thickness of the casing.

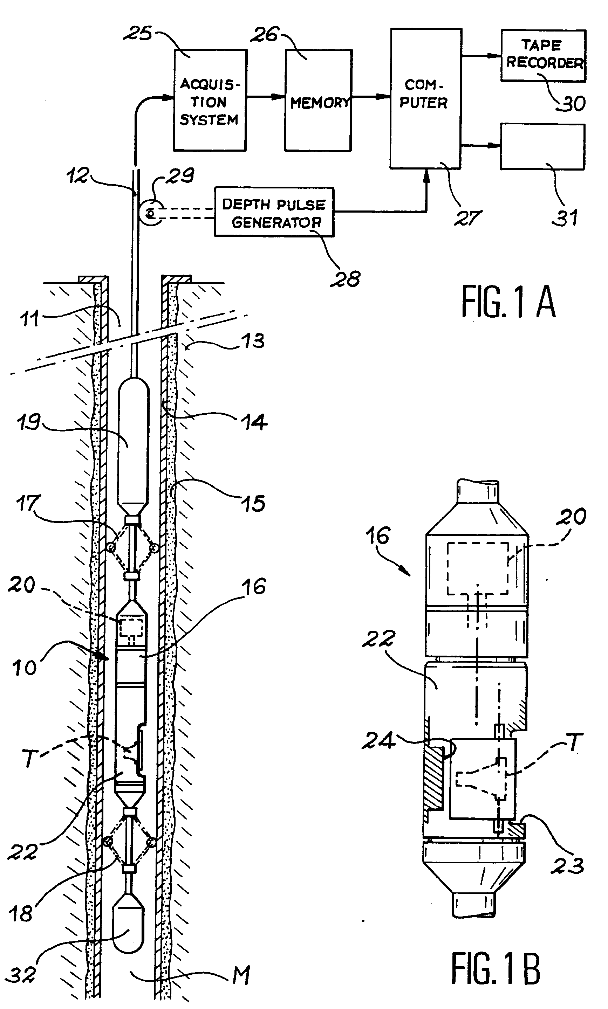

With reference to Figure 1, an acoustic logging apparatus for studying the quality of the cement bond comprises a downhole device 10 suspended in a borehole 11 at the end of a multiconductor cable 12.

The borehole, filled with a fluid, typically drilling mud M, passes through strata 13 and is lined with casing 14. Cement 15 occupies the annular space between the casing and the geological strata traversed by the borehole. This logging apparatus is based on the measurement concept of casing resonance as disclosed in the above-mentioned Havira patent.

In general, the downhole device 10 is an elongate body including a sonde 16, top and bottom centralizers 17 and 18 for holding the sonde 16 centered on the axis of the casing 14, an acoustic compensation section 22, a hydraulic compensation section 32, and an electronics section 19.

Various embodiments are possible for the sonde 16. In a first embodiment (not shown) the sonde may comprise eight acoustic transducers angularly distributed around the sonde and disposed helically so as to enable eight sectors of casing to be inspected, as described in the aforementioned Havira patent or U.S. patent 4,685,092 to Dumont.

In a second embodiment, the sonde 16 has a single acoustic transducer T. The sonde 16 has a drive motor 20 for rotating the assembly carrying the transducer T about the axis of the sonde.

Thus, in normal operation, the sonde can investigate the entire periphery of the borehole by continuously rotating the transducer.

A more detailed description of the structure of the sonde in this embodiment is given in US application N° 494,721 filed March 16, 1990. By having a system with an offset drive shaft and an abutment it is possible in a calibration mode of operation to decouple the reflector 24 from the drive shaft so as to cause only the transducer T to be rotated into a position where it looks at the reflector.

The centralizers 18 and 19 are conventional and are provided with means (not shown) for establishing electrical and/or hydraulic connections between the top portion and the bottom portion of each of the centralizers.

The hydraulic compensation section 32 is of conventional type and serves to keep the pressure of the fluid in the hydraulic circuits in the downhole device 10 at the same pressure as the borehole fluid M, i.e. the hydrostatic pressure of the well, thereby avoiding excessive differential pressures on sensitive portions of the sonde.

The section 22 containing the acoustic transducer has a hollow portion 23 which is open to the mud M. The transducer T emits acoustic waves through the hollow portion 23 along an axis which is substantially perpendicular to the axis of the sonde 16, either towards the reflector 24 in the calibration mode or towards the casing (normal measurement mode). The reflector 24 which is substantially perpendicular to the emission axis of the transducer T simulates a radial sector of the casing 14 under investigation.

The transducer T is controlled to emit acoustic pulses of short duration and having a spectrum covering a frequency range from 200 kHz to 700 kHz, with the mean frequency being about 500 kHz.

Since the transducer T emits radially, each emitted pulse is reflected by the various interfaces it encounters, namely the casing 14 or the reflector 24, thereby giving rise to an echo signal which is detected by the same transducer.

The detected signals are transmitted to the electronics section 19 by appropriate cabling (not shown). In the electronics section 19 the signals are sampled at a selected rate, put into digital form, multiplexed, and finally transmitted to the surface via a modem (not shown) connected to conductors in the cable 12.

On the surface, the conductor's of the cable 12 are connected to an acquisition system 25 including a modem for decoding the transmitted information, and also including a demultiplexer. The signals are then stored in a memory 26. The memory is connected to a computer 27 suitable for performing a sequence of processing stages at each depth. These stages are explained in greater detail below.

Signals representative of the depth of the device 10 are generated by a displacement detector comprising a pulse generator 28 controlled by a wheel 29 bearing tangentially against the cable 12. The pulse generator 28 delivers a pulse each time the cable 12 has moved through a unit length.

The processing performed by the computer 27 provides a first set of output signals which are delivered to a magnetic recorder 30 which stores them, for each depth, in digital form on a magnetic tape. The magnetic recording comprises, in particular, the signals delivered by the transducer T and it consequently enables the data to be processed subsequently. Also for each depth, the computer 27 provides a second set of output signals to an optical recorder 31 which provides a graphical recording on a film, e.g. of the type described in French patent 2 491 123.

Figure 2 shows the variations as a function of time in the amplitude of a signal S as sensed by the transducer T, and illustrates the method of windowing signal S disclosed in the Havira patent.

A signal representative of the quality of the bond between the cement and the casing is produced from the energy W2 measured in a portion of the reflected signal S which essentially correspond to reverberations between the walls of the casing as excited by the pulses emitted by the transducer.

In the window t₂ - t₃, the energy W2 may also include energy due to multiple reflections on the geological strata. These reflections can be observed from instant t₁.

The energy W2 is normalized by the maximum peak energy W1 in the sensed signal S. This normalization serves to eliminate effects due to the mud, but it is not fully satisfactory as explained hereinabove.

Figure 3 shows the same variations in amplitude of the signal S as a function of time and as sensed by the transducer T, together with two windows defined as explained below, which both include a time reference or time origin t₀ located in a portion of the signal which corresponds to the initial reflection from the casing wall.

### Determining a time origin

According to the invention, a stable time origin is determined so as to escape both from noise and from variations in transducer response over different measurements.

To do this, several methods can be contemplated.

In a first possibility, an analytic signal Sₐ(t) is determined as follows:${\text{S}}_{\text{a}} \text{(t) = S(t) - iH(S(t))}$
where S(t) is the measured signal and H is the Hilbert transform of the measured signal, with i being the square root of -1. The Hilbert transform is obtained by any known algorithm.

The time origin t₀ is defined by the instant at which the analytic signal has a peak.

Another method of obtaining the analytic signal Sₐ(t) consists in performing a Fourier transform by any fast Fourier transform algorithm, then in removing the negative frequencies by filtering, and subsequently in performing a further fast Fourier transform on the signal obtained after filtering.

The instant at which a peak occurs in the analytic signal is taken as being the origin t₀.

An even faster method consists in rectifying the signal received by the transducer, in extracting the amplitude maximum from the rectified signal, together with two extreme values on either side of said maximum so as to obtain three points defined by (time, amplitude) coordinates.

A second order polynomial passing through these three points is then determined in conventional manner.

The maximum of the resulting polynomial is determined and the time coordinate t₀ of the maximum is taken as being the time origin and serves as a reference for determining the position and duration of the windows.

### Windowing the signal S(t)

A first portion PW of the signal S(t) is defined by a wide time window (-t₁, t₃) designated as processing window hereinafter. The signal portion PW obtained in this way includes the initial reflection of the acoustic signal from the inner wall of the casing and acoustic returns due to reverberations between the walls of said casing caused by its resonance in response to the acoustic pulse.

A second portion CW of signal S(t) used for normalization purposes is defined by a narrow time window (-t₁, +t₁), also called the normalization window, which window is centered at time origin t₀ and can be defined as the early portion of the wide window. The signal portion CW thus defined mainly comprises the initial reflection from the wall of the casing.

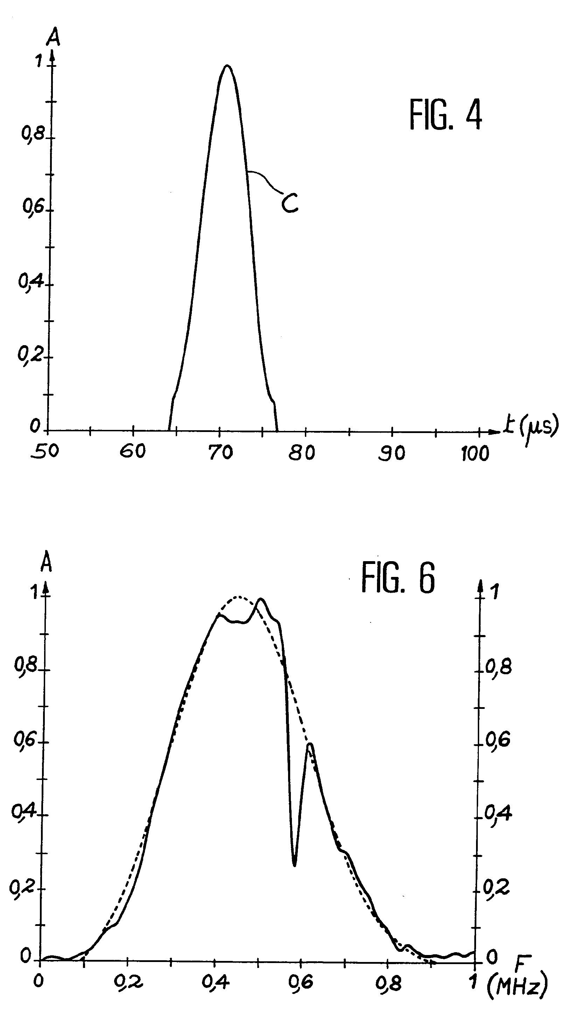

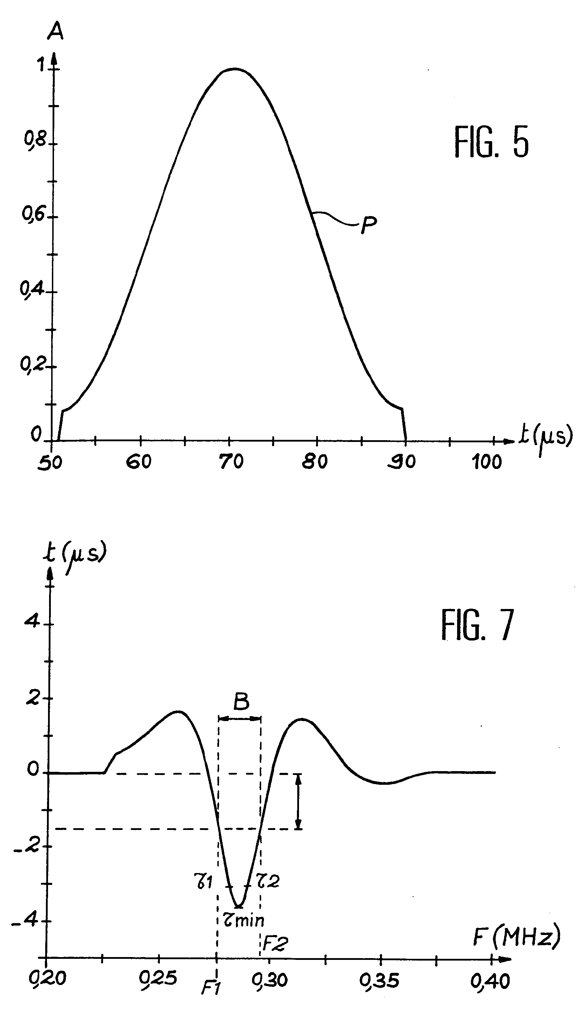

Figures 4 and 5 respectively show an example of the windowing signal C(t) corresponding to a narrow window as used for normalization, and an example of the windowing signal P(t) corresponding to a wide window as used for performing the processing described below.

Windowed signals corresponding to the portions CW and PW may be obtained by multiplying the signal S(t) by the signals shown in Figures 4 and 5, namely the narrow window signal C(t) and the wide window signal P(t).

The time intervals spanned by the windows are defined as multiples of the nominal resonance period of the casing, so as to automatically adapt the windows to the type of casing under investigation.

The time intervals -t₁,t₀ and t₀,t₁ should lie in the range between 1.5 and 3 times the nominal resonance period of the casing, and are preferably equal to 2.5 times this nominal period. The normalization window -t₁,t₁ thus lasts for a period lying between 3 and 6 times the nominal resonance period of the casing, preferably a period equal to 5 times this nominal period.

A suitable range for the time interval t₀,t₃ of the processing window is from 6 to 12 times, preferably 6 to 8 times the nominal resonance period of the casing. Thus, the entire time interval -t₁,t₃ spanned by the processing window is suitably between 7.5 times and 15 times, preferably between 7.5 and 11 times the nominal resonance period of the casing. The nominal resonance period of the casing is determined from the nominal thickness of the casing and the sound velocity in the casing, both parameters being known.

For the window signals C(t) and P(t), Hamming windows can be used. Figure 4 shows such a Hamming window for C(t), centered on time origin t₀. As regards the processing window P(t), although Figure 5 shows for it a symmetrical curve, it is preferred to use a Hamming window centered on the time origin t₀ but truncated at time t₁ i.e. an asymmetrical window signal.

### Characterizing the resonance of the casing

The resonance of the casing in response to the acoustic pulse depends on the cement-casing bond, which will be expressed as an acoustic impedance of the cement, and the casing thickness, which are the primary parameters of interest in the casing inspection. These parameters can be determined from a characterization of a resonance mode of the casing e.g. the fundamental mode.

As noted above, the wide processing window P(t) is defined so as to contain the direct reflection from the casing and the early part of the resonance. The narrow window C(t) only contains the reflection from the casing and as such, the windowed signal CW(t) provides information on the system formed by the pulse generating assembly transducer and drive electronics - and the mud. In other words, it provides the response of the "infinite-block" (i.e. a casing of infinite thickness and extent). In the determination of the parameters of interest, the information contained in the signal portion CW will be used to normalize the information contained in signal S(t) within the processing window P(t) so as to automatically compensate for variations (with temperature, time etc) in the characteristics of the acoustic pulse and the attenuation of the mud.

In order to find and characterize the resonance, the frequency spectra of the windowed signals PW and CW are used. Figure 6 shows in solid lines the amplitude spectrum PW(ω) obtained from signal PW(t), using a discrete Fourier transform. and in dashed lines the amplitude spectrum CW(ω) obtained likewise from signal CW(t). The resonance of the casing appears as a marked dip in signal PW(ω).

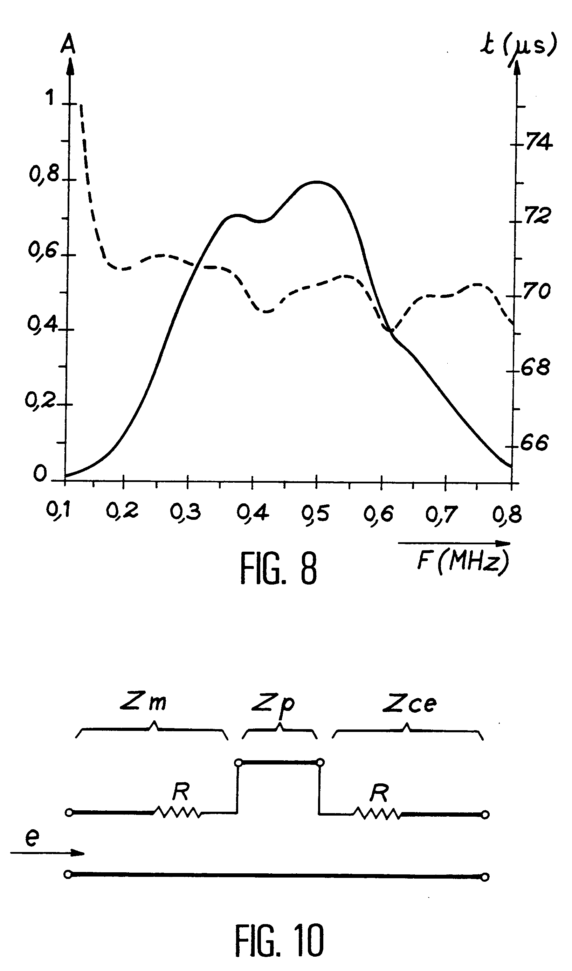

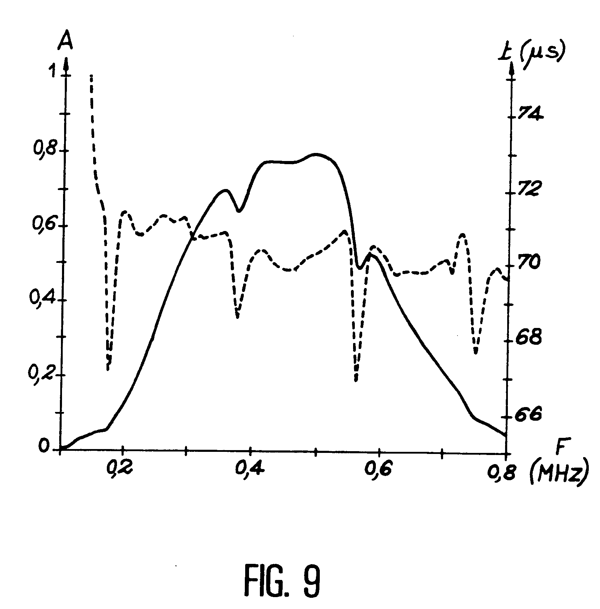

Now, the amplitude spectrum being highly dependent on transducer variations and attenuation by the borehole fluid, it is preferred to use the group delay spectrum. The group delay is defined as the derivative of radian phase vs. angular frequency and is computed from the phase spectrum. The group delay response is advantageous in that it tends to be smooth and linear except at resonances and therefore, allows easy identification and characterization of the resonance. This is illustrated in Figure 8, which shows the theoretical amplitude (solid line) and group delay (dashed line) responses of a casing of 178 millimeters (7 inches) diameter and 4 millimeters thickness, in the case of a solid cement bond (cement impedance of 8 MRayl). Figure 9 shows likewise the amplitude and group delay responses of a casing of 178 millimeters diameter and 16 mm thickness, with the same cement bond.

Figure 7 highlights the group delay spectrum around a resonance. The resonance can be characterized by the central frequency F₀ of the resonance, corresponding to a minimum group delay τmin, the depth H of the dip corresponding to the resonance, and the fractional bandwidth B/F₀. The bandwidth B is the width of the dip at a level Δτ above the group delay minimum τₘᵢₙ equal to a predetermined percentage, e.g. 40%, of the depth H of the dip : B = F₂ - F₁, with the corresponding group delays τ₂ and τ₁ such that τ₂ - τₘᵢₙ = τ₁ - τₘᵢₙ = Δτ = 0.4H.

The central frequency F₀ is primarily dependent on the casing thickness while the depth and fractional bandwidth are primarily influenced by the acoustic impedances of the mud and the cement.

### Determining casing thickness and cement impedance

A normalization step of the group delay spectrum is first performed in order to eliminate any slope, by linearizing the group delay spectrum of the normalization signal CW and subtracting it from the spectrum of the signal PW.

Then the parameters of the resonance are determined, by searching a minimum in the normalized group delay spectrum within a pre-determined frequency range located around the nominal resonance frequency of the casing. This yields values for the parameters FO, H and B/FO, which will be used as the "measured parameters" in the following description.

After the measured parameters of the resonance have been determined from the normalized group delay spectrum, the casing thickness and cement impedance are determined by iteration using a simple model, shown in Figure 10. This model is a planar model (i.e. the casing wall is modelled as a plane) defined by the cement impedance Z_{ce} and the casing thickness d, with mud impedance Zₘ and casing impedance Zₚ. Mud impedance Zₘ is obtained by separate calibration and casing impedance Zₚ is a known data. Resistances R can be added to the model to perform corrections taking into account the curvature of the casing, the resistances being set to values defined in accordance with the diameter of the casing.

The response of the model to a Dirac pulse e is determined in the frequency domain, with the initial value for the cement impedance Z_{ce} obtained from the measured depth H of resonance by using look-up tables, and the initial value of casing thickness derived from central frequency F₀. This yields an impulse response spectrum of the model.

This spectrum is then multiplied by the normalization spectrum CW(ω) representative of the transducer-mud system to obtain what can be termed the transducer-mud spectrum.

The processing window is then applied in the frequency domain by convolution with the transducer-mud spectrum, and the group delay spectrum of the convoluted signal is computed.

This group delay spectrum is again normalized as described above by subtracting the linearized group delay spectrum of the normalization signal from the group delay spectrum of the convoluted signal.

The normalized group delay spectrum is then used to determine "model" values for the parameters of the resonance, namely the central frequency F_{mod} corresponding to the group delay minimum τ_{mid} identified in this spectrum within the specified frequency range, and the fractional bandwidth B_{mod} taken at a level τ_{mod} = τ_{mid} + Δτ (Δτ being as defined above). These model parameters are compared with the measured parameters. From the comparison, new estimates for the cement impedance and casing thickness are defined for a second iteration. The iteration is continued until the model group delay response is characterized by the same parameters as the measured resonance. Iteration may be performed by Newton-Raphson fitting technique, which typically requires only three iterations.

The planar model used in this method is quite simple and has the advantage of minimizing processing time.

A more exact model, based on the cylindrical geometry of the casing, could be used instead of the planar model. Such a cylindrical model would include additional parameters (casing diameter, transducer dimensions, transducer offset from the borehole axis, sound velocity in mud).

### Alternative computation methods

Other computation methods can be envisioned with the same basic definitions of time windows C(t) and P(t) as specified above. An alternative method consists of the following steps.

The entire signal S(t) is converted into the frequency domain before any windowing. The spectrum S(ω) thus obtained is normalized by the spectrum CW(ω) derived from the calibration signal CW(t), the normalized amplitude being the ratio of the amplitudes and the normalized phase the difference between the phases.

The processing window is then applied to the normalized spectrum in the frequency domain, by convolution of the normalized spectrum with the spectrum of the processing window.

The group delay spectrum is then calculated from the result of the convolution. This allows the resonance to be characterized as described above, thus yielding central frequency, depth and fractional bandwidth.

From this point, it is possible to determine the cement impedance and casing thickness by direct computation, using pre-established look-up tables relating these parameters with the parameters which characterize the resonance. Another approach is to use the model as defined above. The computation steps will be as explained above, except that the step of normalizing the group delay spectrum can be dispensed with.

## Claims

1. A method for determining at least one characteristic of a casing cemented in a borehole, such as cement bond and casing thickness, from a reflected acoustic signal S(t) obtained by directing an acoustic pulse at a substantially normal incidence towards a radial sector of the wall of the casing, said pulse stimulating thickness resonance within the walls of the casing, comprising the steps of : defining a first time window corresponding to a first portion of signal S(t) including the initial reflection from the casing and subsequent acoustic returns due to resonance, defining a second time window corresponding to a second portion of signal S(t) only including the initial reflection from the casing, and determining said casing characteristic from information related to resonance contained in said first time window while normalizing said information by information contained within said second time window.

2. A method according to claim 1, wherein said second time window is defined so as to include the amplitude maximum of signal S(t).

3. A method according to claim 2, wherein the definition of the first and second time windows comprises the steps of determining the instant at which the amplitude maximum occurs in the signal, said instant being taken as a time origin t₀, and defining first and second time windows on the basis of this time origin.

4. A method according to claim 3, wherein, for determining the time origin, an analytic signal Sₐ(t) of the response S(t) is determined: the amplitude maximum of the analytic signal is determined; and the time origin t₀ is determined as being that instant at which the amplitude maximum occurs in the analytic signal Sₐ(t).

5. A method according to claim 4, wherein the analytic signal Sₐ(t) is obtained by a Hilbert transform.

6. A method according to claim 4, wherein the analytic signal Sₐ(t) is obtained by performing a Fourier transform, filtering to eliminate negative frequencies from the spectrum, and performing a further Fourier transform on the signal as obtained after filtering.

7. A method according to claim 3, wherein the time origin is defined by performing the following steps: extracting the absolute values of the amplitude maximum in the acoustic signal and of two extreme values situated on either side of said maximum; determining a second degree polynomial fitting these three values; and defining the time origin as the instant at which the polynomial is at a maximum.

8. A method according to claim 3, wherein the time intervals spanned by the time windows are defined by multiples of the nominal resonant period of the casing.

9. A method according to claim 8, wherein the second time window is centered on the time origin t₀, and extends on either side of the time origin over a period of time lying in the range from 1.5 and 3 times the nominal resonance period of the casing.

10. A method according to claim 8 or 9, wherein the first time window extends before the time origin t₀ over 1.5 to 3 times the nominal resonance period of the casing and after the time origin over 6 to 12 times said nominal resonance period.

11. A method according to claim 1, wherein said characteristic of the casing is determined by combining information derived from the frequency spectrum of the acoustic signal S(t) within the first time window and information derived from frequency spectrum of the acoustic signal S(t) within the second time window.

12. A method according to claim 11, comprising the step of determining the frequency spectra of the first portion of signal S(t) and of the second portion of signal S(t), respectively, normalizing the spectrum of the first portion by the spectrum of the second portion, and characterizing from said normalized spectrum the resonance of the casing, the parameters of the resonance being indicative of the characteristics of the casing.

13. A method according to claim 12, wherein the frequency spectra are the group delay frequency spectra.

14. A method for acoustic inspection of a casing cemented in a borehole, comprising the steps of obtaining a reflected acoustic signal S(t) by directing an coustic pulse at a substantially normal incidence towards a radial sector of the wall of the casing, said pulse stimulating thickness resonance within the walls of the casing, defining a first time window corresponding to a first portion of signal S(t) including the initial reflection from the casing and subsequent acoustic returns due to resonance, defining a second time window corresponding to a second portion of signal S(t) only including the initial reflection from the casing, and determining at least one characteristic related to the casing from information related to resonance contained in said first time window while normalizing said information by information contained within said second time window.

15. An apparatus for acoustic inspection of a casing cemented in a borehole, comprising a sonde adapted for displacement in the borehole which includes transducer means for obtaining a reflected acoustic signal S(t) by directing an acoustic pulse at a substantially normal incidence towards a radial sector of the wall of the casing, said pulse stimulating thickness resonance within the walls of the casing; and signal processing means for performing the steps of defining a first time window corresponding to a first portion of signal S(t) including the initial reflection from the casing and subsequent acoustic returns due to resonance, defining a second time window corresponding to a second portion of signal S(t) only including the initial reflection from the casing, and determining at least one characteristic related to the casing from information related to resonance contained in said first time window while normalizing said information by information contained within said second time window.

## Patentansprüche

1. Ein Verfahren zum Bestimmen mindestens eines Kennwerts einer in einem Bohrloch zementierten Auskleidung, wie der Zementhaftung und der Auskleidungsdicke, aus einem reflektierten akustischen Signal S(t), gewonnen durch Richten eines akustischen Impulses mit im wesentlichen senkrechtem Auftreffen auf einen radialen Sektor der Wandung der Auskleidung, welcher Impuls Dickenresonanz innerhalb der Wandungen der Auskleidung stimuliert, umfassend die Schritte: Definieren eines ersten Zeitfensters entsprechend einem ersten Abschnitt des Signals S(t) einschließlich der anfänglichen Reflexion von der Auskleidung und nachfolgender akustischer Rückläufe infolge Resonanz, Definieren eines zweiten Zeitfensters entsprechend einem zweiten Abschnitt des Signals S(t), das nur die anfängliche Reflexion von der Auskleidung umfaßt, und Bestimmen des Auskleidungskennwerts aus Information bezüglich der Resonanz, enthalten in dem ersten Zeitfenster, während die Information normalisiert wird durch Information, enthalten in dem zweiten Zeitfenster.

2. Ein Verfahren nach Anspruch 1, bei dem das zweite Zeitfenster so definiert ist, daß es das Amplitudenmaximum des Signals S(t) enthält.

3. Ein Verfahren nach Anspruch 2, bei dem die Definition des ersten und des zweiten Zeitfensters die Schritte umfaßt der Bestimmung des Zeitpunkts, zu welchem das Amplitudenmaximum in dem Signal erscheint, welcher Zeitpunkt als Zeitursprung t₀ gewählt wird, und Definieren des ersten und des zweiten Zeitfensters auf der Basis dieses Zeitursprungs.

4. Ein Verfahren nach Anspruch 3, bei dem für die Bestimmung des Zeitursprungs ein analytisches Signal Sₐ(t) des Ansprechens S(t) bestimmt wird, wobei das Amplitudenmaximum des analytischen Signals bestimmt wird, und der Zeitursprung t₀ als derjenige Zeitpunkt festgelegt wird, bei dem das Amplitudenmaximum in dem analytischen Signal Sₐ(t) auftritt.

5. Ein Verfahren nach Anspruch 4, bei dem das analytische Signal Sₐ(t) durch eine Hilbert-Transformation gewonnen wird.

6. Ein Verfahren nach Anspruch 4, bei dem das analytische Signal Sₐ(t) gewonnen wird durch Ausführen einer Fourier-Transformation, Filtern zum Eliminieren negativer Frequenzen aus dem Spektrum, und Ausführen einer weiteren Fourier-Transformation auf das Signal, wie es nach der Filterung erhalten wird.

7. Ein Verfahren nach Anspruch 3, bei dem der Zeitursprung definiert ist durch Ausführung der folgenden Schritte: Extrahieren der Absolutwerte des Amplitudenmaximums in dem akustischen Signal und von zwei Extremwerten beidseits des genannten Maximums, Bestimmen eines Polynoms zweiten Grades, das auf diese drei Werte paßt, und Definieren des Zeitursprungs als der Zeitpunkt, bei welchem das Polynom bei einem Maximum liegt.

8. Ein Verfahren nach Anspruch 3, bei dem die Zeitintervalle, die von den Zeitfenstern umspannt werden, definiert sind als Vielfache der Nominal-Resonanz-Periode der Auskleidung.

9. Ein Verfahren nach Anspruch 8, bei dem das zweite Zeitfenster auf den Zeitursprung t₀ zentriert ist und sich beidseits des Zeitursprungs über eine Zeitperiode erstreckt, die im Bereich von 1,5- bis 3-fachen der Nominal-Resonanz-Periode der Auskleidung liegt.

10. Ein Verfahren nach Anspruch 8 oder 9, bei dem das erste Zeitfenster sich vor dem Zeitursprung t₀ über das 1,5- bis 3-fache der Nominal-Resonanz-Periode der Auskleidung erstreckt und nach dem Zeitursprung über das 6- bis 12-fache der Nominal-Resonanz-Periode.

11. Ein Verfahren nach Anspruch 1, bei dem der Kennwert der Auskleidung bestimmt wird durch Kombinieren von Information, abgeleitet aus dem Frequenzspektrum des akustischen Signals S(t) innerhalb des ersten Zeitfensters, und Information, abgeleitet aus dem Frequenzspektrum des akustischen Signals S(t) innerhalb des zweiten Zeitfensters.

12. Ein Verfahren nach Anspruch 11, umfassend den Schritt der Bestimmung der Frequenzspektren des ersten Abschnitts des Signals S(t) bzw. des zweiten Abschnitts des Signals S(t), Normalisieren des Spektrums des ersten Abschnitts durch das Spektrum des zweiten Abschnitts und Charakterisieren aus dem normalisierten Spektrum die Resonanz der Auskleidung, wobei die Parameter der Resonanz indikativ sind für die Kennwerte der Auskleidung.

13. Ein Verfahren nach Anspruch 12, bei dem die Frequenzspektren Gruppenverzögerungs-Frequenzspektren sind.

14. Ein Verfahren für die akustische Untersuchung einer in ein Bohrloch zementierten Auskleidung, umfassend die Schritte des Gewinnens eines reflektierten akustischen Signals S(t) durch Richten eines akustischen Impulses bei im wesentlichen senkrechtem Auftreffen auf einen radialen Sektor der Auskleidungswandung, welcher Impuls Dickenresonanz innerhalb der Auskleidungswandungen stimuliert, Definieren eines ersten Zeitfensters entsprechend einem ersten Abschnitt des Signals S(t) einschließlich der Anfangsreflexion von der Auskleidung und nachfolgende akustische Rückläufe infolge Resonanz, Definieren eines zweiten Zeitfensters entsprechend einem zweiten Abschnitt des Signals S(t), der nur die anfängliche Reflexion von der Auskleidung umfaßt, und Bestimmen zumindest eines Kennwertes bezüglich der Auskleidung aus Information bezüglich der Resonanz, enthalten in dem ersten Zeitfenster, während die Information normalisiert wird durch Information, enthalten in dem zweiten Zeitfenster.

15. Eine Vorrichtung für die akustische Inspektion einer in ein Bohrloch zementierten Auskleidung, umfassend eine in dem Bohrloch verlagerbare Sonde, die Wandlermittel enthält für das Gewinnen eines reflektierten akustischen Signals S(t) durch Richten eines akustischen Impulses bei im wesentlichen senkrechtem Auftreffen auf einen radialen Sektor der Auskleidungswandung, welcher Impuls Dickenresonanz innerhalb der Auskleidungswandungen stimuliert, und Signalverarbeitungsmittel für die Ausführung der Schritte der Definition eines ersten Zeitfensters entsprechend einem ersten Signalabschnitt S(t) einschließlich der Anfangsreflexion von der Auskleidung und nachfolgender akustischer Rückläufe infolge Resonanz, Definieren eines zweiten Zeitfensters entsprechend einem zweiten Abschnitt des Signals S(t), das nur die Anfangsreflexion von der Auskleidung enthält, und Bestimmen mindestens eines Kennwerts bezüglich der Auskleidung aus Information bezüglich der Resonanz, enthalten in dem ersten Zeitfenster, während diese Information normalisiert wird durch Information, enthalten in dem zweiten Zeitfenster.

## Revendications

1. Procédé pour déterminer au moins une caractéristique d'un tubage cimenté dans un forage, telle que la liaison du ciment avec le tubage et l'épaisseur du tubage, à partir d'un signal acoustique réfléchi S(t) obtenu en dirigeant une impulsion acoustique selon une incidence sensiblement normale vers un secteur radial de la paroi du tubage, cette impulsion excitant une résonance dans l'épaisseur de la paroi du tubage, comprenant les étapes suivantes : on définit une première fenêtre correspondant à une première partie du signal S(t) incluant la réflexion initiale du tubage et des retours ultérieurs dus à la résonance, on définit une seconde fenêtre correspondant à une seconde portion du signal S(t) n'incluant que la réflexion initiale du tubage, et on détermine la dite caractéristique à partir d'informations en rapport avec la résonance contenues dans la première fenêtre en calibrant ces informations par des informations contenues dans la seconde fenêtre.

2. Procédé selon la revendication 1, dans lequel la seconde fenêtre est définie de façon à inclure l'amplitude maximale du signal S(t).

3. Procédé selon la revendication 2, dans lequel la définition des première et seconde fenêtres comprend les étapes consistant à determiner l'instant auquel le signal atteint l'amplitude maximale, cet instant étant pris comme origine des temps t₀, et à définir les première et seconde fenêtres sur la base de cette origine des temps.

4. Procédé selon la revendication 3, dans lequel, pour déterminer l'origine des temps, on détermine un signal analytique Sₐ(t) à partir du signal S(t), on détermine l'amplitude maximale du signal analytique, et on détermine l'origine des temps t₀ comme l'instant auquel le signal analytique Sₐ(t) atteint cette amplitude maximale.

5. Procédé selon la revendication 4, dans lequel le signal analytique Sₐ(t) est obtenu au moyen d'une transformée de Hilbert.

6. Procédé selon la revendication 4, dans lequel le signal analytique Sₐ(t) est obtenu en réalisant une transformée de Fourier en filtrant pour éliminer les fréquences négatives du spectre, et en réalisant à nouveau une transformée de Fourier sur le signal ainsi filtré.

7. Procédé selon la revendication 3, dans lequel l'origine des temps est déterminée par les étapes consistant à extraire les valeurs absolues de l'amplitude maximale du signal acoustique et de deux extrema situées de part et d'autre de l'amplitude maximale, à déterminer un polynôme du second degré ajusté sur ces trois valeurs, et à définir l'origine des temps comme l'instant auquel ce polynôme atteint un maximum.

8. Procédé selon la revendication 3, dans lequel les intervalles de temps occupés par les fenêtres sont définis comme des multiples de la période de résonance nominale du tubage.

9. Procédé selon la revendication 8, dans lequel la seconde fenêtre est centrée sur l'origine des temps, et s'étend de part et d'autre de l'origine des temps sur un intervalle compris entre 1,5 et 3 fois la période de résonance nominale du tubage.

10. Procédé selon l'une des revendications 8 ou 9, dans lequel la première fenêtre s'étend avant l'origine des temps t₀ sur un intervalle compris entre 1,5 et 3 fois la période de résonance nominale du tubage et après l'origine des temps sur un intervalle compris entre 6 et 12 fois la période de résonance nominale du tubage.

11. Procédé selon la revendication 1, dans lequel la dite caractéristique du tubage est déterminée en combinant des informations obtenues à partir du spectre de fréquences du signal acoustique S(t) dans la première fenêtre et des informations obtenues à partir du spectre de fréquences du signal S(t) dans la seconde fenêtre.

12. Procédé selon la revendication 11, dans lequel on détermine les spectres de fréquences respectivement de la première portion et de la seconde portion du signal S(t), on calibre le spectre de la première portion par le spectre de la seconde portion, et on caractérise la résonance du tubage au moyen du spectre calibré, les paramètres de la résonance étant indicatifs des caractéristiques du tubage.

13. Procédé selon la revendication 12, dans lequel les spectres de fréquences sont les spectres de retard de groupe.

14. Procédé pour l'inspection acoustique d'un tubage cimenté dans un forage, dans lequel on obtient un signal acoustique réfléchi S(t) en dirigeant une impulsion acoustique selon une incidence sensiblement normale vers un secteur radial de la paroi du tubage, cette impulsion excitant une résonance dans l'épaisseur de la paroi du tubage, on définit une première fenêtre correspondant à une première partie du signal S(t) incluant la réflexion initiale du tubage et des retours ultérieurs dus à la résonance, on définit une seconde fenêtre correspondant à une seconde portion du signal S(t) n'incluant que la réflexion initiale du tubage, et on détermine au moins une caractéristique en rapport avec le tubage à partir d'informations en rapport avec la résonance en calibrant ces informations par des informations contenues dans la-seconde fenêtre.

15. Dispositif pour l'inspection acoustique d'un tubage cimenté dans un forage, comprenant une sonde adaptée au déplacement dans un forage et équipée de moyens permettant d'obtenir un signal acoustique réfléchi S(t) en dirigeant une impulsion acoustique selon une incidence sensiblement normale vers un secteur radial de la paroi du tubage, cette impulsion excitant une résonance dans l'épaisseur de la paroi du tubage, et des moyens de traitement pour définir une première fenêtre correspondant à une première partie du signal S(t) incluant la réflexion initiale du tubage et des retours ultérieurs dus à la résonance, définir une seconde fenêtre correspondant à une seconde portion du signal S(t) n'incluant que la réflexion initiale du tubage, et déterminer au moins une caractéristique en rapport avec le tubage à partir d'informations en rapport avec la résonance contenues dans la première fenêtre en calibrant ces informations par des informations contenues dans la seconde fenêtre.
